# FASCICULE DE BREVET EUROPEEN

(11) **EP 2 179 876 B1**
(45) Date de publication et mention de la délivrance du brevet: **18.04.2012**
(21) Numéro de dépôt: 09172728.9
(22) Date de dépôt: 09.10.2009
(51) Int. Cl.: B60J 3/02, B60J 7/00

(54) **Dispositif d'occultation d'un pavillon de véhicule automobile à palettes pare-soleil articulées et véhicule correspondant**
Abdeckvorrichtung für ein Verdeck eines Kraftfahrzeugs mit Sonnenschutzlamellen und entsprechendes Kraftfahrzeug
Device for concealing a roof of an automobile with hinged sun visor elements and corresponding automobile

(30) Priorité: 23.10.2008 FR 0857219
(43) Date de publication de la demande: 28.04.2010
(73) Titulaire: Advanced Comfort Systems France SAS - ACS France, 79300 Bressuire (FR)
(72) Inventeur: Juge, Xavier, 49120, SAINT-GEORGES DES GARDES (FR)
(74) Mandataire: Bioret, Ludovic

(56) Documents cités:
- EP-A- 1 375 222
- EP-A- 1 741 587
- FR-A- 2 853 591
- US-A1- 2004 160 082

## Description

Le domaine de l'invention est celui de l'occultation de surfaces vitrées d'un véhicule automobile, et notamment de surfaces vitrées correspondant au pavillon et/ou à la partie supérieure du pare-brise de ce dernier.

Plus précisément, l'invention concerne les dispositifs d'occultation mettant en oeuvre, d'une part, au moins un élément d'occultation mobile entre au moins une position repliée et au moins une position dépliée, en particulier pour un pavillon et/ou un pare-brise de véhicule et, d'autre part, au moins une palette pare-soleil, montée sur la barre de tirage de l'élément d'occultation, ou de l'un des éléments d'occultation.

Le pavillon de certains véhicules automobiles est pourvu d'une surface et/ou d'une ouverture vitrée. Dans d'autres cas, le pare-brise peut être prolongé dans sa partie supérieure, par rapport aux véhicules classiques. Les deux approches peuvent d'ailleurs être combinées, pour fournir une grande surface vitrée.

La tendance actuelle est en effet de proposer des véhicules automobiles présentant de plus en plus de surfaces vitrées. On cherche donc à augmenter, autant que faire se peut, la surface des vitres latérales, des pare-brises et des lunettes arrière, et des pavillons.

On développe également des pavillons intégralement, ou essentiellement, vitrés, et ne faisant qu'un, au moins visuellement, avec le pare-brise (absence d'un élément de carrosserie extérieur entre les deux éléments vitrés).

Les objectifs de ces développements sont notamment d'offrir :
- une meilleure visibilité pour les occupants du véhicule ;
- une luminosité accrue à l'intérieur du véhicule ;
- une sensation d'espace élargi pour les occupants ;
- une amélioration esthétique générale du véhicule ;
- ...

Pour protéger les passagers du véhicule des rayons du soleil, lorsque ceci est nécessaire ou souhaitable, il a donc été proposé des dispositifs d'occultation combinant un élément d'occultation, sous la forme d'une toile montée sur un enrouleur ou d'un velum rigide ou semi-rigide. Dans certains modes de mise en oeuvre, deux éléments d'occultation peuvent être prévus, pour permettre une occultation différenciée pour le conducteur et pour le passager avant.

L'élément d'occultation est classiquement muni d'une barre de tirage, sur laquelle est montée au moins une palette pare-soleil. Lorsque l'élément d'occultation s'étend sur toute la largeur du véhicule, deux palettes sont généralement prévues. Ces palettes pare-soleil sont montées sur la barre de tirage (ou une zone d'extrémité du velum, le cas échéant), de façon à être mobiles en rotation entre une position rabattue parallèlement au pavillon et une position rabaissée vers le pare-brise pour protéger les yeux du conducteur et/ou du passager avant contre le soleil.

Cette approche est notamment décrite dans le document FR-2 853 591, au nom du déposant de la présente demande de brevet. Selon cette technique, on propose une combinaison des fonctions « store (ou velum) d'occultation » et « palettes pare-soleil ». Les palettes sont solidaires de la barre de tirage, associée selon ce mode de réalisation à une toile d'occultation, montée par exemple sur un tube enrouleur (non représenté). Elles sont mobiles en rotation par rapport à la barre de tirage, de façon à permettre de régler l'inclinaison de la palette correspondante par rapport au pare-brise. Le réglage peut bien sûr être indépendant pour les deux palettes, celles-ci étant mobiles indépendamment l'une de l'autre en rotation autour d'une pièce de liaison de la barre de tirage.

EP 1 741 587 décrit le préambule de la revendication 1.

Plus précisément, selon les techniques connues, la barre de tirage est généralement munie d'une articulation et d'un crochet, adaptés pour coopérer chacun avec un axe prévu à cet effet sur chaque palette. La solidarisation d'un crochet et d'un axe se fait généralement par clippage. Après avoir déclippé le crochet, il est possible de déplacer la palette vers une vitre latérale, par pivotement autour de l'articulation. Cette approche est en usage depuis de nombreuses années dans les véhicules automobiles, et l'homme du métier a toujours considéré que les palettes devaient être équipées de tels axes.

Cependant, les inventeurs ont constaté que, dans le cas où les palettes sont montées sur une barre de tirage, cette approche présentait divers inconvénients. En effet, l'utilisateur a souvent tendance à saisir une palette et non la barre de tirage pour déplacer l'élément d'occultation. C'est notamment le cas lorsque la palette est repliée et que l'utilisateur souhaite replier le velum ou la toile, c'est-à-dire déplacer la barre de tirage vers l'arrière du véhicule.

Dans cette situation, on constate qu'il peut arriver que la palette se sépare de la barre de tirage (« déclippage »). Ceci est bien sûr non acceptable, tant pour un aspect de qualité et d'image perçue que de sécurité (notamment lorsque le conducteur déplace l'élément d'occultation en roulant).

L'invention a notamment pour objectif de pallier cet inconvénient de l'art antérieur.

Plus précisément, un objectif de l'invention est de fournir un dispositif d'occultation d'une surface vitrée correspondant à la partie supérieure d'un pare-brise et/ou d'un pavillon vitré, comprenant au moins une palette pare-soleil montée sur une barre de tirage, dont le montage soit simple et efficace.

Notamment, un objectif de l'invention est de fournir un tel dispositif, dans lequel le risque de désolidarisation intempestive d'une palette est supprimée, ou à tout le moins fortement réduit.

L'invention a également pour objectif, selon au moins un mode de réalisation, de permettre d'autres utilisations d'une palette ou de son équipement (par exemple un miroir de courtoisie).

Un autre objectif de l'invention est de fournir un tel dispositif, qui soit simple à monter, à installer et à mettre en oeuvre.

Ces objectifs, ainsi que d'autres qui apparaîtront par la suite, sont atteints à l'aide d'un dispositif d'occultation d'un pavillon vitré et/ou d'une partie supérieure d'un pare-brise d'un véhicule automobile, comprenant au moins un élément d'occultation mobile entraîné par une barre de tirage entre au moins une position escamotée et au moins une position déployée, ladite barre de tirage portant au moins une palette pare-soleil articulée par rapport à ladite barre de tirage, entre au moins une position repliée et au moins une position active.

Selon l'invention, ladite barre de tirage porte au moins un axe de fixation s'étendant parallèlement à l'axe de ladite barre de tirage, et chacune desdites palettes pare-soleil porte au moins un élément d'accrochage apte à être solidarisé par clippage audit axe de fixation ou à un desdits axes de fixation.

On obtient ainsi un système simple et efficace, dans lequel, notamment les risques, les risques de déclippage intempestif sont supprimés, ou à tout le moins fortement réduits, même lorsque l'utilisateur agit directement sur une palette pour déplacer l'élément d'occultation.

Selon un premier mode de réalisation de l'invention, le dispositif comprend au moins deux axes de fixation pour chacune desdites palettes.

Cette approche peut notamment permettre de désolidariser complètement une palette de son support, en cas de besoin, par exemple pour utiliser le miroir de courtoisie équipant la palette.

Selon un deuxième mode de réalisation, le dispositif comprend un unique axe de fixation pour chaque palette, cette dernière étant également reliée à ladite barre de tirage par une articulation.

Ainsi, il est possible de faire pivoter la palette vers une vitre latérale, en cas de besoin.

Dans ce cas notamment, chacun desdits axes de fixation présentent avantageusement une forme générale de U, dont la base définit une zone de clippage et les branches latérales assurent la solidarisation avec la barre de tirage.

Préférentiellement, chacun desdits éléments d'accrochage comprend une ouverture permettant l'insertion dudit axe, et orientée sensiblement selon un axe vertical, lorsque la palette est dans ladite position repliée.

De cette façon, un déclippage ne peut pas apparaître, lorsque l'on déplace l'élément d'occultation (le déplacement étant sensiblement horizontal, c'est-à-dire sensiblement perpendiculaire à l'ouverture).

Pour limiter encore les risques de déclippage intempestif, ladite ouverture est avantageusement orientée vers le bas du véhicule, dans ladite position repliée.

Selon les cas, on peut prévoir un unique élément d'occultation, ladite barre de tirage étant guidée dans des rails de guidage prévus à cet effet sur les bords latéraux dudit pare-brise et/ou dudit pavillon, ou deux éléments d'occultation indépendants, associés chacun à une barre de tirage guidée dans des rails de guidage prévus à cet effet, l'un desdits rails s'étendant sensiblement au centre dudit pare-brise et/ou dudit pavillon.

De façon avantageuse, au moins un desdits éléments d'accrochage porte une lame ressort, apte à coopérer avec l'axe correspondant.

Cette lame ressort permet notamment d'obtenir un bon maintien et/ou une rotation aisée de la palette, quelles soient les conditions d'utilisation, en particulier en termes de température.

Selon un premier mode de réalisation de l'invention, le ou lesdits éléments d'occultation sont un ou des velums, c'est-à-dire un ou des panneaux d'occultation rigides ou semi-rigides.

Selon un deuxième mode de réalisation de l'invention, le ou lesdits éléments d'occultation sont un ou des stores à enrouleur.

L'invention concerne également les véhicules automobiles équipés de tels dispositifs.

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés parmi lesquels :
- les figures 1A et 1B illustrent schématiquement un exemple de dispositif d'occultation selon l'invention, l'élément d'occultation étant respectivement en position escamotée et en position déployée ;
- la figure 2 présente une portion de la barre de tirage et une portion d'une palette en cours de solidarisation selon l'invention ;
- la figure 3 est une vue en coupe de la figure 2 ;
- la figure 4 est une vue en coupe correspondant au dispositif de la figure 2, lorsque la palette est clippée à l'axe de la barre de tirage ;
- la figure 5 est une vue en coupe du dispositif des figures précédentes, la palette pare-soleil étant en position repliée.

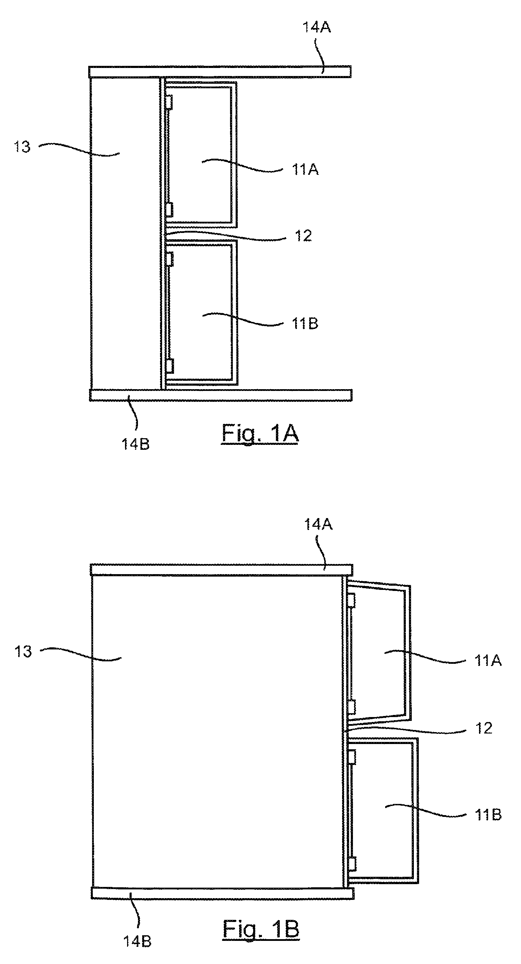

L'invention concerne donc un dispositif combinant des fonctions de « velum », ou de « store d'occultation », et de « palettes pare-soleil ». Comme illustré par les figures 1A et 1B, ces palettes 11A, 11B sont solidaires de la barre de tirage 12 du velum 13.

La barre de tirage 12 est guidée dans deux rails latéraux 14A, 14B, et permet de contrôler le déplacement du velum 13 entre la position escamotée de la figure 1A et la position déployée de la figure 1B. Bien sûr, des positions de déploiement intermédiaires peuvent être définies (de façon continue ou indexée).

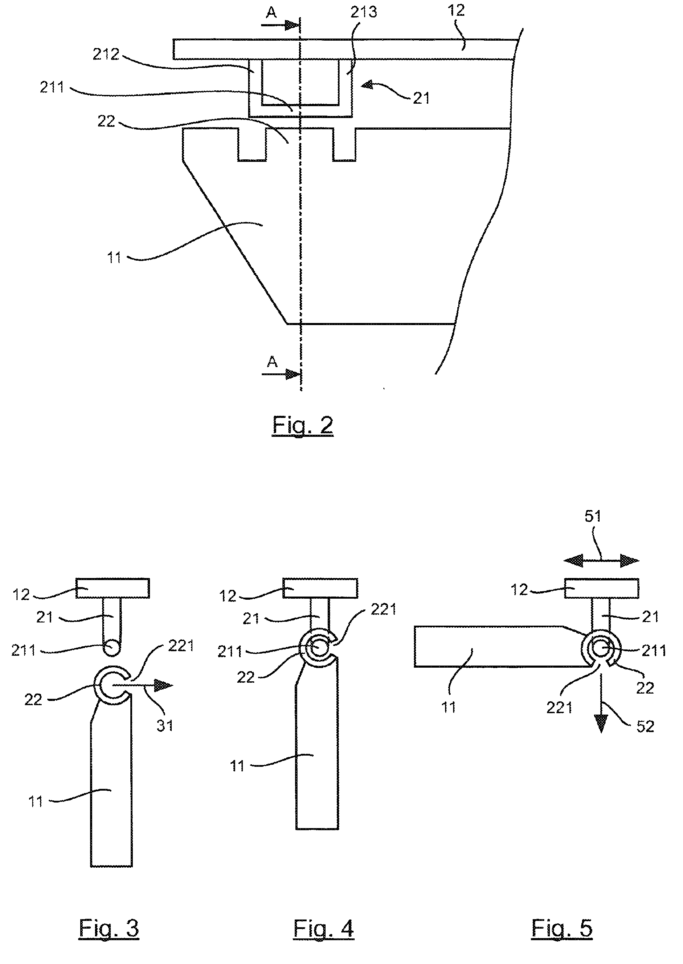

Comme illustré par la figure 2, la barre de tirage 12 porte des crochets 21 (sur la vue partielle de la figure 2, un seul de ces crochets est illustré, mais on en prévoira généralement deux, placés sensiblement de façon à permettre l'accrochage des deux côtés de la palette).

Cet axe 21 présente une forme générale de U. Il est par exemple en plastique, métallique ou mixte. La base 211 du U définit la zone de clippage, et les deux branches latérales du U 212 et 213 assurent la solidarisation à la barre de tirage 12. La base 211 du U s'étend donc parallèlement à la barre de tirage 12.

La section de cet axe est par exemple circulaire, ou plus généralement adaptée à permettre le clippage et la rotation de la palette.

Cette palette 11 comprend donc au moins un élément d'accrochage, ou crochet, 22, apte à venir se solidariser avec l'axe 21, et plus précisément la base 211.

Selon un premier mode de mise en oeuvre, illustré par les figures 1A et 1B, chaque palette possède deux crochets. Cette approche permet notamment à un utilisateur de déclipper la palette en cas de besoin, par exemple pour passer celle-ci à un passager des places arrière, pour permettre à celui-ci d'utiliser un miroir de courtoisie (non représenté) présent sur la palette.

Selon un deuxième mode de réalisation, plus classique, il est prévu un seul crochet, et une articulation, par exemple de type pivot, permettant à l'utilisateur de déplacer la palette, après avoir déclippé le crochet de son axe, d'une position frontale (figure 1B) à une position latérale, le long d'une vitre latérale du véhicule.

Dans les deux cas, il est aisé de reclipper le ou les crochets sur leur axe respectif.

Selon le mode de réalisation illustré, ce crochet 22 présente une section en C, comme illustré notamment sur la figure 3.

Cette figure 3, qui est une vue en coupe AA de la figure 2 montre que, dans ce mode de réalisation, le crochet 22 a une ouverture 221 orientée sensiblement horizontalement (flèche 31) lorsque la palette est sensiblement verticale (position active).

Les dimensions du crochet 22, et notamment celle de son ouverture 221, ainsi que le matériau dans lequel il est réalisé, sont choisis pour permettre le clippage du crochet 22 sur l'axe 21, à force, et de façon à obtenir une solidarisation efficace après l'assemblage.

Cet assemblage, ou clippage, se fait donc en introduisant le crochet 22 sur l'axe 21, pour obtenir le dispositif illustré par la figure 4.

Une fois ainsi montée, la palette 11 peut être déplacée en rotation autours de l'axe 21, pour passer de la position active de la figure 4 à la position repliée de la figure 5. Des positions intermédiaires, ou allant au-delà de la position de figure 3, par exemple pour placer la palette 11 parallèlement au pare-brise, sont bien sûr possibles.

Avantageusement, une lame ressort (non représentée) est montée à l'intérieur du crochet 22, pour optimiser le maintien et/ou la rotation de la palette, et offrir une bonne tenue dans le temps, indépendamment de l'usure, des variations de température,...

On constate que, notamment dans la position repliée de la figure 5, dans laquelle les utilisateurs ont tendance à agir sur la palette 11, et non sur la barre de tirage 12, pour déplacer le velum (flèche 51), il n'y a pas de risque que le crochet 22 se désolidarise intempestivement de l'axe 21. En effet, l'ouverture 221 est orientée dans une direction verticale 52, perpendiculaire ou sensiblement perpendiculaire à l'axe de coulissement 51 du velum.

En outre, dans le mode de réalisation illustré par la figure 5, l'ouverture 221 est orientée vers le bas du véhicule (c'est-à-dire dans une direction opposée à la barre tirage) il n'y a pas non plus de risque de désolidarisation ou de déclippage intempestif, par exemple dans l'hypothèse où l'utilisateur saisirait trop violemment la palette pour la ramener dans la position active de la figure 4.

Plusieurs variantes de mise en oeuvre peuvent être envisagées, sans sortir du cadre de l'invention. Ainsi il est possible que l'axe 21 s'étende sur une partie substantielle de la barre de tirage 12, de façon à former un axe unique sur lequel deux crochets 21 de la palette viendront se clipper. Il est également possible de prévoir un unique crochet 21, s'étendant sur une partie substantielle de la palette, de préférence sur une portion centrale.

Il est également possible de modifier l'orientation de l'ouverture 221 du crochet, en cas de besoin.

Le velum peut par ailleurs être remplacé par une toile d'occultation, montée sur un tube enrouleur. Il est également possible de prévoir deux velums, ou deux toiles d'occultation, associées chacune respectivement au passager avant et au conducteur du véhicule. Dans ce cas, chacun des éléments d'occultation est associé à une barre de tirage, portant une palette pare soleil. Des rails montés sur une zone centrale du pare brise et/ou du pavillon sont alors prévus, pour le guidage de ces barres de tirage.

Des moyens complémentaires pour contrôler et sécuriser l'utilisation des éléments d'occultation et des palettes peuvent être prévus, notamment selon les techniques déjà proposées par le demandeur. On peut notamment prévoir des moyens de blocage de la barre de tirage dans des positions intermédiaires, des moyens autorisant la rotation des palettes uniquement dans des positions déployées de l'élément d'occultation, des moyens de guidage de la palette, des zones de logement des palettes en position repliée dans la barre de tirage et/ou le velum,...

Les palettes peuvent être pleines, ou former de deux demi-coquilles assemblées, ou présenter un cadre à l'intérieur duquel est tendue une toile.

Il est à noter, par ailleurs, qu'il est possible de mettre en oeuvre le système de l'invention sur des véhicules ne présentant pas d'élément d'occultation associé aux palettes. Dans ce cas, les axes de solidarisation peuvent être montés directement sur un élément de carrosserie ou de garniture intérieure du véhicule.

## Revendications

1. Dispositif d'occultation d'un pavillon vitré et/ou d'une partie supérieure d'un pare-brise d'un véhicule automobile, comprenant au moins un élément d'occultation mobile entraîné par une barre de tirage (12) entre au moins une position escamotée et au moins une position déployée, ladite barre de tirage (12) portant au moins une palette pare-soleil (11A ; 11B) articulée par rapport à ladite barre de tirage (12), entre au moins une position repliée et au moins une position active,
**caractérisé en ce que** ladite barre de tirage (12) porte au moins un axe de fixation (21) s'étendant parallèlement à l'axe de ladite barre de tirage (12), et **en ce que** chacune desdites palettes pare-soleil (11A; 11B) porte au moins un élément d'accrochage (22) apte à être solidarisé par clippage audit axe de fixation ou à un desdits axes de fixation (21).

2. Dispositif d'occultation selon la revendication 1, **caractérisé en ce qu'**il comprend au moins deux axes de fixation (21) pour chacune desdites palettes (11A ; 11B).

3. Dispositif d'occultation selon la revendication 1, **caractérisé en ce qu'**il comprend un unique axe de fixation pour chaque palette (11A ; 11B), cette dernière étant également reliée à ladite barre de tirage (12) par une articulation.

4. Dispositif d'occultation selon l'une quelconque des revendications 1 à 3, **caractérisé en ce que** chacun desdits axes de fixation présentent une forme générale de U, dont la base (211) définit une zone de clippage et les branches latérales (212 ; 213) assurent la solidarisation avec la barre de tirage (12).

5. Dispositif d'occultation selon l'une quelconque des revendications 1 à 4, **caractérisé en ce que** chacun desdits éléments d'accrochage (22) comprend une ouverture (221) permettant l'insertion dudit axe, et orientée sensiblement selon un axe vertical, lorsque la palette (11A ; 11 B) est dans ladite position repliée.

6. Dispositif d'occultation selon la revendication 5, **caractérisé en ce que** ladite ouverture (221) est orientée vers le bas du véhicule, dans ladite position repliée.

7. Dispositif d'occultation selon l'une quelconque des revendications 1 à 6, **caractérisé en ce qu'**au moins un desdits éléments d'accrochage (22) porte une lame ressort, apte à coopérer avec l'axe (21) correspondant.

8. Dispositif d'occultation selon l'une quelconque des revendications 1 à 7, **caractérisé en ce que** le ou lesdits éléments d'occultation appartiennent au groupe comprenant les velums (13) et les stores à enrouleur.

9. Dispositif d'occultation selon l'une quelconque des revendications 1 à 8, **caractérisé en ce qu'**il comprend un unique élément d'occultation, ladite barre de tirage (12) étant guidée dans des rails de guidage (14A ; 14B) prévus à cet effet sur les bords latéraux dudit pare-brise et/ou dudit pavillon.

10. Dispositif d'occultation selon l'une quelconque des revendications 1 à 8, **caractérisé en ce qu'**il comprend deux éléments d'occultation indépendants, associés chacun à une barre de tirage (12) guidée dans des rails de guidage (14A ; 14B) prévus à cet effet, l'un desdits rails s'étendant sensiblement au centre dudit pare-brise et/ou dudit pavillon.

11. Véhicule automobile comprenant un dispositif d'occultation d'un pavillon vitré et/ou d'une partie supérieure d'un pare-brise d'un véhicule automobile, comprenant au moins un élément d'occultation mobile entraîné par une barre de tirage (12) entre au moins une position escamotée et au moins une position déployée, ladite barre de tirage (12) portant au moins une palette pare-soleil (11A ; 11B) articulée par rapport à ladite barre de tirage (12), entre au moins une position repliée et au moins une position active,
**caractérisé en ce que** ladite barre de tirage porte au moins un axe de fixation (21) s'étendant parallèlement à l'axe de ladite barre de tirage (12), et **en ce que** chacune desdites palettes pare-soleil (11A; 11B) porte au moins un élément d'accrochage (22) apte à être solidarisé par clippage audit axe de fixation ou à un desdits axes de fixation (21).

## Claims

1. Screening device for a glass window and/or an upper portion of a windscreen of a motor vehicle, comprising at least one movable screening element which is driven by a pulling bar (12) between at least one retracted position and at least one deployed position, the pulling bar (12) carrying at least one sun visor member (11A; 11B) which is articulated relative to the pulling bar (12) between at least one folded position and at least one active position,
**characterised in that** the pulling bar (12) carries at least one fixing shaft (21) which extends parallel with the shaft of the pulling bar (12) and **in that** each of the sun visor members (11A; 11B) carries at least one hooking element (22) which is capable of being fixed by means of clipping to the fixing shaft or to one of the fixing shafts (21).

2. Screening device according to claim 1, **characterised in that** it comprises at least two fixing shafts (21) for each of the members (11A; 11B).

3. Screening device according to claim 1, **characterised in that** it comprises a single fixing shaft for each member (11A; 11B), the member also being connected to the pulling bar (12) by means of an articulation.

4. Screening device according to any one of claims 1 to 3, **characterised in that** each of the fixing axes is generally U-shaped, of which the base (211) defines a clipping zone and the lateral branches (212; 213) ensure fixing to the pulling bar (12).

5. Screening device according to any one of claims 1 to 4, **characterised in that** each of the hooking elements (22) comprises an opening (221) which allows the shaft to be inserted and which is orientated substantially along a vertical axis when the member (11A; 11B) is in the folded position.

6. Screening device according to claim 5, **characterised in that** the opening (221) is orientated towards the bottom of the vehicle, in the folded position.

7. Screening device according to any one of claims 1 to 6, **characterised in that** at least one of the hooking elements (22) carries a spring leaf which is capable of co-operating with the corresponding shaft (21).

8. Screening device according to any one of claims 1 to 7, **characterised in that** the screening element(s) belong(s) to the group comprising awnings (13) and roller blinds.

9. Screening device according to any one of claims 1 to 8, **characterised in that** it comprises a single screening element, the pulling bar (12) being guided in guide rails (14A; 14B) which are provided for this purpose on the lateral edges of the windscreen and/or the roof.

10. Screening device according to any one of claims 1 to 8, **characterised in that** it comprises two independent screening elements which are each associated with a pulling bar (12) which is guided in guide rails (14A; 14B) provided for this purpose, one of the rails extending substantially at the centre of the windscreen and/or the roof.

11. Motor vehicle comprising a device for screening a glass roof and/or an upper portion of a windscreen of a motor vehicle, comprising at least one movable screening element which is driven by a pulling bar (12) between at least one retracted position and at least one deployed position, the pulling bar (12) carrying at least one sun visor member (11A; 11B) which is articulated relative to the pulling bar (12) between at least one folded position and at least one active position,
**characterised in that** the pulling bar carries at least one fixing shaft (21) which extends parallel with the shaft of the pulling bar (12) and **in that** each of the sun visor members (11A; 11B) carries at least one hooking element (22) which is capable of being fixed by means of clipping to the fixing shaft or to one of the fixing shafts (21).

## Patentansprüche

1. Verdunkelungsvorrichtung eines verglasten Autodachs und/oder eines oberen Teils einer Windschutzscheibe eines Kraftfahrzeugs, die mindestens ein bewegliches Verdunkelungselement aufweist, das von einer Zugstange (12) zwischen mindestens einer eingefahrenen Position und mindestens einer ausgefahrenen Position angetrieben wird, wobei die Zugstange (12) mindestens eine Sonnenschutzklappe (11A; 11B) trägt, die relativ zu der Zugstange (12) zwischen mindestens einer zurückgefalteten und mindestens einer aktiven Position angelenkt ist,
**dadurch gekennzeichnet, dass** die Zugstange (12) mindestens eine Befestigungsachse (21) trägt, die sich parallel zu der Achse der Zugstange (12) erstreckt, und dass jede der Sonnenschutzklappen (11A; 11B) mindestens ein Anhängelement (22) trägt, das durch Anklammern fest an der Befestigungsachse oder an einer der Befestigungsachsen (21) verbunden werden kann.

2. Verdunkelungsvorrichtung nach Anspruch 1, **dadurch gekennzeichnet, dass** sie mindestens zwei Befestigungsachsen (21) für jede der Klappen (11A; 11 B) aufweist.

3. Verdunkelungsvorrichtung nach Anspruch 1, **dadurch gekennzeichnet, dass** sie eine einzige Befestigungsachse für jede Klappe (11A; 11 B) aufweist, wobei diese Letztere ebenfalls mit der Zugstange (12) durch eine Anlenkung verbunden ist.

4. Verdunkelungsvorrichtung nach einem der Ansprüche 1 bis 3, **dadurch gekennzeichnet, dass** jede der Befestigungsachsen eine allgemeine U-Form aufweist, deren Basis (211) eine Klammerzone definiert und deren seitliche Schenkel (212; 213) den Zusammenhalt mit der Zugstange (12) sicherstellen.

5. Verdunkelungsvorrichtung nach einem der Ansprüche 1 bis 4, **dadurch gekennzeichnet, dass** jedes der Anhängelemente (22) eine Öffnung (221) aufweist, die das Einfügen der Achse erlaubt, und die im Wesentlichen entlang einer vertikalen Achse ausgerichtet ist, wenn die Klappe (11A; 11B) in der zurückgefalteten Position ist.

6. Verdunkelungsvorrichtung nach Anspruch 5, **dadurch gekennzeichnet, dass** die Öffnung (221) in der zurückgefalteten Position zur Unterseite des Fahrzeugs gerichtet ist.

7. Verdunkelungsvorrichtung nach einem der Ansprüche 1 bis 6, **dadurch gekennzeichnet, dass** mindestens eines der Anhängelemente (22) eine Federklinge trägt, die mit der entsprechenden Achse (21) zusammenwirken kann.

8. Verdunkelungsvorrichtung nach einem der Ansprüche 1 bis 7, **dadurch gekennzeichnet, dass** das oder die Verdunkelungselemente zu der Gruppe gehören, die die Sonnensegel (13) und die Rollläden umfassen.

9. Verdunkelungsvorrichtung nach einem der Ansprüche 1 bis 8, **dadurch gekennzeichnet, dass** sie ein einziges Verdunkelungselement aufweist, wobei die Zugstange (12) in Führungsschienen (14A; 14B), die dazu auf den seitlichen Rändern der Windschutzscheibe und/oder des Fahrzeughimmels vorgesehen sind, geführt wird.

10. Verdunkelungsvorrichtung nach einem der Ansprüche 1 bis 8, **dadurch gekennzeichnet, dass** sie zwei unabhängige Verdunkelungselemente aufweist, die jeweils einer Zugstange (12) zugeordnet sind, die in Führungsschienen (14A; 14B), die dazu vorgesehen sind, geführt werden, wobei sich eine der Schienen im Wesentlichen in der Mitte der Windschutzscheibe und/oder des Fahrzeugshimmels erstreckt.

11. Kraftfahrzeug, das eine Verdunkelungsvorrichtung eines verglasten Fahrzeughimmels und/oder eines oberen Teils einer Windschutzscheibe eines Kraftfahrzeugs aufweist, die mindestens ein bewegliches Verdunkelungselement aufweist, das von einer Zugstange (12) zwischen mindestens einer eingefahrenen Position und mindestens einer ausgefahrenen Position angetrieben wird, wobei die Zugstange (12) mindestens eine Sonnenschutzklappe (11A; 11B) trägt, die relativ zu der Zugstange (12) zwischen mindestens einer zurückgefalteten Position und einer aktiven Position angelenkt ist,
**dadurch gekennzeichnet, dass** die Zugstange mindestens eine Befestigungsachse (21) trägt, die sich parallel zu der Achse der Zugstange (12) erstreckt, und dass jede der Sonnenschutzklappen (11A; 11 B) mindestens ein Anhängelement (22) trägt, das durch Anklammern an der Befestigungsachse oder an einer der Befestigungsachsen (21) verbunden werden kann.
